Europäisches Patentamt

European Patent Office

Office européen des brevets

(11) Veröffentlichungsnummer: **0 344 364 B1**

## (12) EUROPÄISCHE PATENTSCHRIFT

(45) Veröffentlichungstag der Patentschrift: **02.03.94**

(21) Anmeldenummer: **88121067.8**

(22) Anmeldetag: **16.12.88**

(51) Int. Cl.⁵: $G01J\ 1/04$, $G01S\ 3/78$

(54) **Detektorvorrichtung.**

(30) Priorität: **28.05.88 DE 3818229**

(43) Veröffentlichungstag der Anmeldung:
**06.12.89 Patentblatt 89/49**

(45) Bekanntmachung des Hinweises auf die
Patenterteilung:
**02.03.94 Patentblatt 94/09**

(84) Benannte Vertragsstaaten:
**DE FR GB IT SE**

(56) Entgegenhaltungen:
EP-A- 0 114 053
DE-A- 2 648 704
FR-A- 2 496 866
FR-A- 2 548 383

**JOURNAL OF THE OPTICAL SOCIETY OF AMERICA, Band 60, Nr. 2, Februar 1970, Seiten 245-247, New York, US; R. WINSTON: "Light collection within the framework of geometrical optics"**

(73) Patentinhaber: **Deutsche Aerospace AG**

**D-81663 München(DE)**

(72) Erfinder: **Poisel, Hans, Dr.**
**Neustädter Strasse 6**
**D-8060 Dachau(DE)**
Erfinder: **Schreiber, Martina**
**Prinzenstrasse 48**
**D-8000 München 19(DE)**
Erfinder: **Trommer, Gerd, Dr.**
**Connollystrasse 16**
**D-8000 München 40(DE)**

## Beschreibung

Die vorliegende Erfindung betrifft eine Detektorvorrichtung zur richtungsabhängigen Erfassung von Laserstrahlung mit einer Vielzahl von Einzeloptiken, die einen vorgegebenen Gesamtraumwinkel erfassen, wobei die Raumwinkel benachbarter Einzeloptiken einander überlappen und wobei jede Einzeloptik aus einem Lichtleiter und einem diesem Lichtleiter zugeordneten Lichtkonzentrator besteht, der eine im wesentlichen trichterförmige, sich zum Ende des Lichtleiters hin verjüngende rotationssymmetrische Gestalt aufweist.

Laserstrahlung im sichtbaren oder im infraroten Bereich wird heutzutage vielseitig verwendet, entweder als gepulste oder intensitätsmodulierte Laserstrahlung, z.B. zur Entfernungsbestimmung, zur Zielbeleuchtung, für die Zielidentifizierung eines Flugkörpers und für dessen direkte Steuerung.

Zur Feststellung und Identifizierung von Laserstrahlung auch vor einer störenden Hintergrundstrahlung ist es notwendig, die charakteristischen Merkmale der Laserstrahlung, wie z.B. deren Wellenlänge und die Signatur hinsichtlich der Pulslänge und der Pulswiederholrate sowie die Einfallsrichtung zu analysieren.

Dabei bestehen je nach dem Einsatzgebiet unterschiedliche Anforderungen an die Weite des erfaßten Raumwinkels sowie an die Winkelauflösung eines Laserwarnsensors sowohl in Azimutrichtung als auch in Elevationsrichtung. Um einen Erfassungsbereich von 360° in der Azimutebene und einen vorgegebenen Winkel bereich in der Elevationsebene (d.h. jede zur Azimutebene senkrechte Ebene) vollständig zu erfassen, sind eine Vielzahl von Einzeloptiken erforderlich, die üblicherweise auf einer Halbkugel angeordnet werden, um so mit hoher Winkelauflösung auch unterschiedliche Laserstrahlungsquellen richtungsabhängig zu erfassen.

Eine als Laserwarnsensor ausgebildete Detektorvorrichtung zur richtungsabhängigen Erfassung von Laserstrahlung ist aus der europäischen Patentschrift EP-A-0 283 538 der Anmelderin bekannt; dort ist eine Vielzahl von Einzeloptiken vorgesehen, wobei jede Einzeloptik mit einem ersten und einem zweiten Lichtleiter verbunden ist, die jeweils zu einer ersten und einer zweiten Detektorstufe führen und wobei sämtliche zur ersten Detektorstufe führenden Lichtleiter gleiche Länge aufweisen, während die zur zweiten Detektorstufe führenden zweiten Lichtleiter untereinander unterschiedlich lang sind. Die Einzeloptiken selber bestehen dabei aus dem Ende eines Lichtleiters und einer dieser Lichtleiter zugeordneten Kugellinse, die jedoch noch den Nachteil eines beschränkten Erfassungsbereiches von ca. ± 10°, möglicher chromatischer Abbildungsfehler und eines eingeschränkten Spektralbereichs aufweist.

Es ist ferner aus der DE-OS 26 48 704 eine optische Anordnung zum Sammeln von elektromagnetischer Strahlung bekannt, die einen Strahlungssammler aufweist, der sich von einer Einfallfläche aus zu einer Strahlungssammelfläche in Form von Strahlung reflektierenden Flächen erstreckt, welche ein inneres Medium mit größerem Brechungsindex als das äußere Medium umgeben und in der Weise konkav gekrümmt sind, daß die reflektierenden Flächen mit maximal möglichem Wirkungsgrad die durch die Einfallfläche eintretende Strahlung auf die Sammelfläche total reflektiert. Eine ähnliche Anordnung ist aus der FR-A-2 496 866 bekannt.

Dieser im wesentlichen trichterförmige Lichtkonzentrator ist derart ausgelegt, daß das eintreffende Licht möglichst gleichmäßig innerhalb eines vorgegebenen Winkelbereichs $0 < \theta_{max}$ gesammelt und konzentriert wird, d.h. die Empfangscharakteristik hat die Form einer Treppenfunktion. Dabei ist dieser Lichtkonzentrator derart ausgelegt, daß er einen Konzentrationsfaktor $c^2$ ($c^2$ = Eintrittsfläche/Austrittsfläche) aufweist, der möglichst nahe an den Idealfall herankommt, der durch das aus dem Liouville-Theorem folgende Abbe'sche Sinusgesetz gegeben ist:

$$c^2_{opt} = \sin^2 \theta_g / \sin^2 \theta_{max}$$

siehe auch J.Opt. Soc. Am. Vol. 60, S. 245 (1970), wobei $\theta_g$ der maximal zulässige Austrittswinkel aus dem Lichtkonzentrator (d.h. meistens 90°) ist und $\theta_{max}$ der maximale Akzeptanzwinkel des Lichtkonzentrators ist.

Das heißt, daß dieser bekannte Lichtkonzentrator so gut wie möglich der folgenden Gleichung entspricht

$$A_k \sin^2 \theta_{max} = A_F \sin^2 \theta_g,$$

um die oben angegebene Forderung der gleichmäßigen Lichtkonzentration im vorgegebenen Winkelbereich zu erfüllen.

Sollen nun bei einem Laserwarnsensor aus Kostengründen nur wenige Einzeloptiken verwendet werden, welche trotzdem den vollen Raumwinkelbereich abdecken, so muß man den abstand der Winkel zwischen den Einzeloptiken entsprechend groß wählen. Um dabei blinde Flecken zu vermeiden, muß die Einzeloptik einen entsprechend großen Akzeptanzwinkel aufweisen. Zur Gewährleistung einer genügend hohen Winkelauflösung ist eine Interpolation zwischen den Einzeloptiken erforderlich ; diese erfordert eine stetige Form der Empfangscharakteristik ohne Sprünge, z.B. im eindimensionalen Fall eine Dreieckscharakteristik . Eine Stufenfunktion, wie z.B. die des Konzentrators der genannten DE-OS 26 48 704, eignet sich daher nicht für eine derartige Interpolation.

Es hat sich herausgestellt, daß bei dem bekannten Laserwarner durch Variation der drei Freiheitsgrade, d.h. des Durchmessers der Kugellinse, des Durchmessers der Lichtleiterfaser sowie des Abstandes zwischen Faser und Kugellinse keine beliebige Formung der Empfangscharakteristik bei vorgegebenen maximalen Akzeptanzwinkel möglich ist.

Der vorliegenden Erfindung liegt die Aufgabe zugrunde, eine als Laserwarnsensor arbeitende Detektorvorrichtung zu schaffen, die bei gleichbleibender Abdeckung des Raumwinkelbereichs mit gleichbleibender Winkelauflösung mit erheblich weniger Einzeloptiken als bisher auskommt und deren Empfangscharakteristik bzw. die Empfindlichkeitskurve nur geringe Gradienten aufweist.

Ausgehend von einer Detektorvorrichtung der eingangs näher genannten Art wird zur Lösung dieser Aufgabe vorgeschlagen, daß die Trichterwand reflektierend ist und derart geformt ist, daß die folgende Bedingung erfüllt ist:

$$A_k \sin^2 \theta_{max} > A_F \sin^2 \theta_g,$$

wobei: $A_k$ die Fläche der lichtaufnehmenden Öffnung des Lichtkonzentrators ist, $A_F$ die Fläche des Lichtleiters, $\theta_{max}$ der maximale Akzeptanzwinkel der aus Lichtkonzentrator und Lichtleiter bestehenden Einzeloptik und $\theta_g$ der durch die numerische Apertur $A_n = \sin \theta_g$ des Lichtleiters definierte Faserakzeptanzwinkel ist. Nur die Einhaltung dieser Bedingung erlaubt die Formung von Empfangscharakteristiken mit geringen Gradienten.

Als mögliches Ausführungsbeispiel weist die Trichterwand die Form eines Rotationsparaboloids auf, das durch die folgende Gleichung definiert ist

$$y = 1/2p\ x^2$$

wobei $p = R_F \tan(\theta_g/2)$ ist.

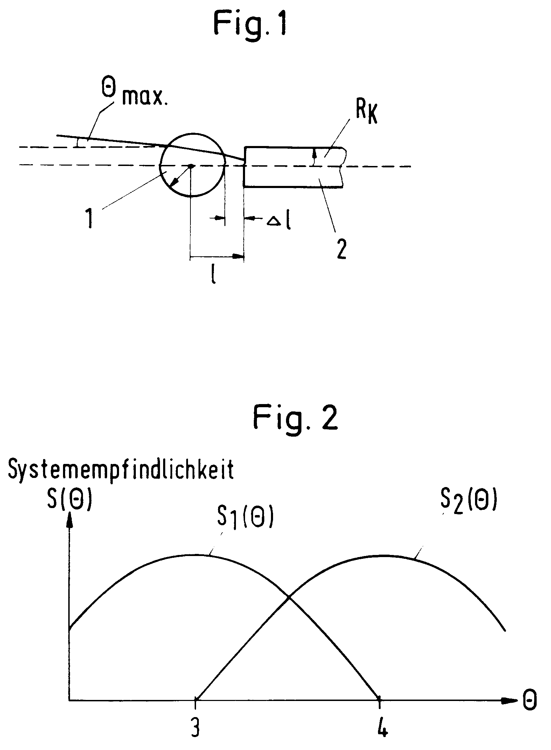

Ein derartiger innen reflektierender trichterartiger Lichtkonzentrator vor dem Ende des Lichtleiters weist eine für die Interpolation geeignete Empfangscharakteristik der Einzeloptik auf, wie sie in Figur 2 für zwei Einzeloptiken dargestellt ist. Die zu jeder Einzeloptik gehörende Kontur der Trichterwände wird mathematisch durch Flächen höherer Ordnung beschrieben, wobei der Grad der Ordnung durch die gewünschte Anzahl an Freiheitsgraden zur Formung der Empfindlichkeitskurve $S(\theta)$ bestimmt ist. Ein derartiger Kurvenverlauf (oder auch ein Kurvenverlauf von zwei sich überlappenden Dreiecken) ist für eine eindeutige Interpolation zwischen zwei benachbarten Einzeloptiken geeignet.

Mit der erfindungsgemäßen Ausgestaltung der Einzeloptiken wird ferner der Vorteil erzielt, daß der Erfassungsbereich des Lichtleiters im Prinzip unbegrenzt variierbar ist; um den Akzeptanzwinkel der Einzeloptik relativ zum Akzeptanzwinkel des Lichtleiters allein zu verkleinern, verjüngt sich der Lichtkonzentrator zum Lichtleiter hin und um diesen Akzeptanzwinkel zu vergrößern, erweitert sich der Lichtkonzentrator zum Lichtleiter hin. Aufgrund der wellenlängenunabhängigen Reflexionswinkel an der spiegelnden Lichtkonzentratorinnenwand bleibt die Empfangscharakteristik wellenlängenunabhängig.

Im folgenden wird die Erfindung anhand der Zeichnung näher erläutert, in der ein vorteilhaftes Ausführungsbeispiel dargestellt ist. Es zeigen:

Fig. 1 schematisch eine Ansicht einer herkömmlichen Einzeloptik;

Fig. 2 die Systemempfindlichkeitskurven zweier erfindungsgemäßer Einzeloptiken, wie sie zur Interpolation geeignet sind;

Fig. 3 einen Schnitt durch eine erfindungsgemäße Einzeloptik

Fig. 4 die mit dieser Einzeloptik erzielbare Systemempfindlichkeit.

In Fig. 1 ist eine Einzeloptik dargestellt, die aus einer Kugellinse 1 besteht, welche im Abstand vor einem Lichtleiter 2 angeordnet ist. Der Abstand der Kugeloberfläche von dem Faserende ist mit $\Delta 1$ bezeichnet und der Abstand des Kugelmittelpunktes zur Fasereingangsfläche mit 1. Der maximale Akzeptanzwinkel der Einzeloptik ist mit $\theta_{max}$ bezeichnet, der Radius des Lichtleiters mit $R_K$ und der Radius der Kugellinse mit $R_L$.

Eine derartige mit einer Kugellinse versehene Einzeloptik weist die bereits erwähnten Nachteile auf, d.h. ist mit einem beschränkten Erfassungsbereich mit chromatischen Abbildungsfehlern und mit einem eingeschränkten Spektralbereich behaftet. Aufgrund des beschränkten Akzeptanzwinkels der benachbarten Einzeloptiken sind entsprechend viele z.B. auf einer Kugelschale anzuordnen, um den vollen Raumwinkelbereich abzudecken.

Eine Verringerung der Anzahl der Einzeloptiken bei gleichzeitiger voller Abdeckbarkeit des Raumwinkels erfordert Systemempfindlichkeitskurven, wie sie in Fig. 2 für zwei benachbarte Einzeloptiken 3, 4 dargestellt sind. Derartige sich überlappende (eventuell auch dreieckförmige) weiche Systemempfindlichkeitskurven mit geringen Gradienten erlauben genaue Interpolationen, so daß der Abstand zwischen den Einzeloptiken vergrößert werden kann und dadurch deren Anzahl verkleinert werden kann, ohne daß eine Verminderung der Winkelauflösung auftritt.

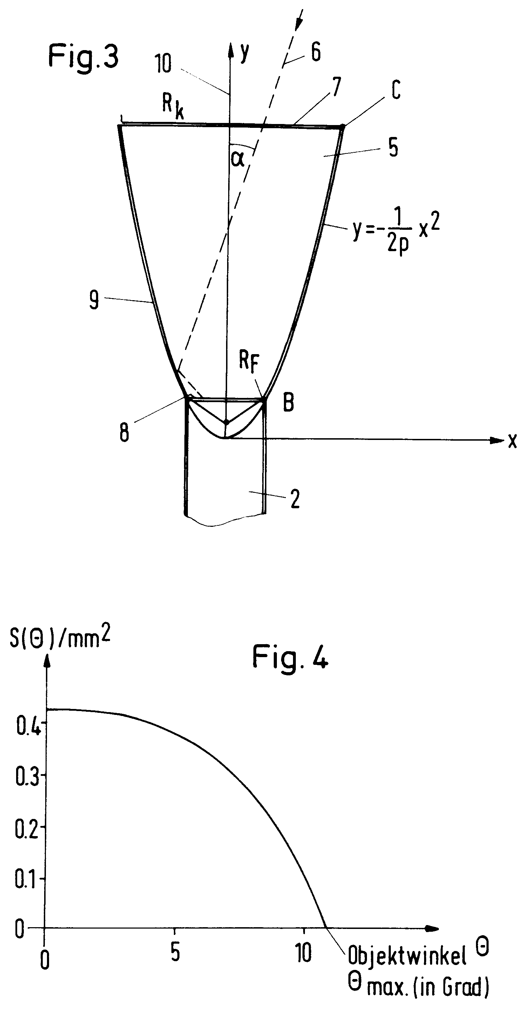

Fig. 3 zeigt einen Schnitt durch eine erfindungsgemäße Einzeloptik, mit der derartige Systemempfindlichkeitskurven $S(\theta)$ erhältlich sind. Eine derartige Einzeloptik besteht aus dem Lichtleiter 2 und einem unmittelbar vor der Aufnahmefläche des Lichtleiters 2 angeordnetem, im wesentlichen trichterförmigen, sich zum Ende des Lichtleiters 2 verjüngenden, rotationssymmetrischen Lichtkonzentrator 5. Die Wand 9 des Lichtkonzentrators ist dabei verspiegelt, so daß ein eintreffender Lichtstrahl 6 in Richtung zur Empfangsoberfläche des Lichtleiters 2 reflektiert wird.

Erfindungswesentlich ist nun, daß die Wand des Trichters 5 derartig geformt ist, daß die folgende Bedingung erfüllt wird:

$$A_k \sin^2 \theta_{max} > A_F \sin^2 \theta_g,$$

wobei $A_k$ die Fläche der lichtaufnehmenden Öffnung 7 des Lichtkonzentrators 5 ist, $A_F$ die Eintrittsfläche 8 des Lichtleiters 2, $\theta_{max}$ der maximale Akzeptanzwinkel der aus Lichtkonzentrator 5 und Lichtleiter 2 bestehenden Einzeloptik ist und $\theta_g$ der durch die numerische Aperatur $A_n = \sin \theta_g$ des Lichtleiters 2 definierte Faserakzeptanzwinkel ist. Mit $R_F$ ist der Lichtleiterradius und mit $R_k$ ist der Radius des Lichtkonzentrators bezeichnet.

Mit einer derartigen Ausgestaltung des Lichtkonzentrators wird die gewünschte Empfangscharakteristik der Einzeloptik $S(\theta)$ gemäß Fig. 2 erhalten. Es ist dabei wesentlich, daß zwecks der geforderten guten Interpolation zwischen zwei benachbarten Einzeloptiken die Kurve $S(\theta)$ nicht rechteckförmig, sondern entweder dreieckförmig oder gemäß Fig. 2 angenähert dreieckförmig ist.

Der in Fig. 3 schematisch dargestellte Lichtkonzentrator 5 kann ein zur Längsachse 10 symmetrisches Rotationsparaboloid sein, das durch die folgende Gleichung definiert ist $y = 1/(2p) \cdot x^2$, wobei $p = R_F \tan(\theta_g/2)$ ist. Damit ergeben sich als Koordinaten für den Punkt B $x_B = R_F$ und für den Punkt C $x_c = R_F + 2p/\tan \theta_{max}$.

Die in Fig. 4 dargestellte Empfangscharakteristik $S(\theta)$ wurde mit einer Einzeloptik der folgenden Abmessungen erhalten: $R_F = 0,15$ mm $\theta_g = 22°$ $R_K = 0,37$ mm $p = 0,03$ $\theta_{max}$ 11° d.h. $A_K = 0,43$ mm$^2$ und $A_F = 0,07$ mm$^2$ und demzufolge:

$$A_K \sin^2 \theta_{max} = 0,0157 > A_F \sin^2 \theta_g = 0,0099.$$

Damit ist die erfindungsgemäß vorgegebene Bedingung erfüllt, daß die Eingangsfläche $A_K$ erheblich größer ist als der Ausdruck $A_F \sin^2 \theta_g / \sin^2 \theta_{max}$.

Anstelle einer Verspiegelung der Konzentratorwand ist ebenso denkbar, Reflexion duch Totalreflexion mittels verschieden hohen Brechzahlen zwishen Konzentratormaterial und Außenmedium zu erzielen.

## Patentansprüche

1. Detektorvorrichtung zur richtungsabhängigen Erfassung von Laserstrahlung mit einer Vielzahl von Einzeloptiken, die einen vorgegebenen Gesamtraumwinkel erfassen, wobei die Raumwinkel benachbarter Einzeloptiken einander überlappen und wobei jede Einzeloptik aus einem Lichtleiter und einem diesem Lichtleiter zugeordneten Lichtkonzentrator besteht, der eine im wesentlichen trichterförmige sich zum Ende des Lichtleiters hin verjüngende, rotationssymmetrische Gestalt aufweist, dadurch gekennzeichnet, daß zum Formen der Empfangscharakteristik der Detektorvorrichtung die Trichterwand (9) eine reflektierende Oberfläche aufweist und derart geformt ist, daß die folgende Bedingung erfüllt ist:

$$A_K \sin^2 \theta_{max} > A_F \sin^2 \theta_g$$

wobei:
$A_K$ die Fläche der lichtaufnehmenden Öffnung des Lichtkonzentrators ist, $A_F$ die Fläche des Lichtleiters ist, $\theta_{max}$ der maximale Akzeptanzwinkel der Eingangsoptik ist und $\theta_g$ der durch die numerische Apertur $A_n = \sin \theta_g$ des Lichtleiters definierte Faserakzeptanzwinkel ist.

2. Detektorvorrichtung nach Anspruch dadurch gekennzeichnet, daß die Trichterwand (9) verspiegelt ist.

3. Detektorvorrichtung nach Anspruch 1, dadurch gekennzeichnet, daß die Trichterwand (9) totalreflektierend ausgebildet ist.

## Claims

1. Detector device for direction-dependent detection of laser radiation comprising a plurality of individual optics which cover a specified overall space angle, in which respect the space angles of adjacent individual optics overlap one another and each individual optic is composed of a light conductor and a therewith associated light concentrator which is of an essentially funnelshaped rotation-symmetrical shape which reduces towards the end of the light conductor, **characterised in that**, for the purpose of forming the receive charactistic of the detector device, the funnel wall (9) comprises a reflective surface and is shaped so that the following condition is met:

$$A_K \sin^2 \theta_{max} > A_F \sin^2 \theta g$$

where $A_K$ represents the light-receiving opening of the light concentrator, $A_F$ is the surface of the light conductor, $\theta_{max}$ is the maximum acceptance angle of the inlet optic, and $\theta_g$ is the fibre-acceptance angle as defined by the

numerical aperture $A_n = \sin \theta_g$.

2. Detector device according to claim 1, **characterised in that** the funnel wall (9) is mirrored.

3. Detector device according to claim 1, **characterised in that** the funnel wall (9) is arranged to be totally reflecting.

**Revendications**

1. Dispositif détecteur destiné à la détection d'un rayonnement laser en fonction de sa direction, comportant une pluralité d'optiques indépendantes qui surveillent un angle prédéterminé de l'espace total, les angles d'optiques indépendantes voisines se chevauchant réciproquement et chaque optique indépendante étant formée d'un guide de lumière et, associé à celui-ci, un concentrateur de lumière qui présente une forme sensiblement en entonnoir symétrique de rotation qui se rétrécit en direction de l'extrémité du guide de lumière, caractérisé par le fait que, pour obtenir la caractéristique de réception du dispositif détecteur, la paroi de l'entonnoir (9) présente une surface réfléchissante et est conformée de manière à satisfaire la condition:

$$a_K \sin^2 \theta max > A_F \sin^2 \theta g$$

où:

$A_K$ est la surface de l'ouverture du concentrateur recevant la lumière, $A_F$ est la surface du guide de lumière, $\theta_{max}$ est l'angle d'acceptance maximal de l'optique d'entrée et $\theta_g$ est l'angle d'acceptance de la fibre défini par l'ouverture numérique $A_n = \sin \theta_g$ de la fibre optique.

2. Dispositif détecteur selon la revendication 1, caractérisé par le fait que la paroi de l'entonnoir (9) est revêtue d'une couche réfléchissante.

3. Dispositif détecteur selon la revendication 1, caractérisé par le fait que la paroi de l'entonnoir (9) est entièrement réfléchissante.

# Fig. 1

# Fig. 2

## Fig.3

$$y = -\frac{1}{2p} x^2$$

## Fig. 4

Objektwinkel Θ
Θmax. (in Grad)

S(Θ)/mm²